# EUROPEAN PATENT APPLICATION

(11) **EP 4 350 923 A1**
(43) Date of publication of application: **10.04.2024**
(21) Application number: 22199467.6
(22) Date of filing: 04.10.2022
(51) Int. Cl.: H02J 1/10

(54) **FUEL CELL NETWORK**

(71) Applicant: AVL List GmbH, 8020 Graz (AT)
(72) Inventor: Fliscu, Catalin, Coventry, CV4 7EZ (GB); Ghosh, Saikat, Essex, SS15 6LN (GB); Aldrian, David, 8020 Graz (AT)

(57) **Abstract**

The invention relates to a fuel cell network (10) for providing electric energy to at least two electrical propulsion units (20a, 20b, 20c) driving a heavy-duty vehicle (100), comprising at least one fuel cell stack (30a, 30b, 30c) per propulsion unit (20a, 20b, 20c) further comprising at least one DC bus (40a, 40b, 40c) per propulsion unit (20a, 20b, 20c), wherein a first DC bus (40a) is electrically isolated against every other DC bus (40b, 40c) and electrically connected to a first electrical propulsion unit (20a) and further electrically connected to a first fuel cell stack (30a) via a DC-DC converter (50), wherein further at least one second DC bus (40b) is electrically isolated against every other DC bus (40a, 40c) and electrically connected to a second electrical propulsion unit (20b) and further electrically connected directly to a second fuel cell stack (30b).

## Description

The present invention relates to a fuel cell network for providing electric energy to at least 2 electrical propulsion units, a heavy-duty vehicle comprising such a fuel cell network as well as a method for controlling the fuel cell stacks of a fuel cell network.

It is common knowledge to use fuel cell stacks for providing electric energy to propulsion units of vehicles. Usually such a vehicle comprises a fuel cell system with at least one fuel cell stack to generate electric energy. At least one propulsion unit is usually provided in form of an electric motor to use the provided electric energy to produce the driving force to drive the electric vehicle.

It is also known, that those fuel cell systems provide energy for so called heavy-duty vehicles in marine applications or large vehicles like trucks. Since those heavy-duty vehicles are in need of a bigger amount of electric energy for driving, it is also known to provide systems with more than one fuel cell stack to provide the enhanced energy. Usually those multiple fuel cell stacks are electrically connected in series to provide the additional driving energy. The electric connection of those multiple fuel cell stacks in series leads to a situation where the structure of one fuel cell is multiplied and thereby the voltage of the complete system is increased. For example, a typical fuel cell stack is structured to work with a voltage of 400 volts. In a heavy-duty vehicle, using two of those fuel cell stacks, the electric serial connection of those two fuel cell stacks leads to a situation where the system voltage is increased to 800 volts.

A problem of the known systems is that the increase of voltage leads to several disadvantages. One disadvantage is the increased complexity coming along with the increased voltage. Moreover, the necessary secondary components also known as a balance of plant also need to be correlated to with the system voltage of 800 volts. Since 400 volts is a typical voltage, an increased voltage leads to specific secondary components with increased complexity, limited sources as well as higher costs.

It is an object of the present invention to overcome above discussed problems. In particular, it is an object of the present invention to provide a fuel cell network with a cost-efficient energy source for heavy-duty vehicles.

Afore said object is achieved by a fuel cell network according to independent claim 1, as well as a heavy-duty vehicle of independent claim 10 and a control method according to independent claim 11. Features of the main claims 1, 10 and 11 can be combined with features of the respective subclaims as long as of technical sense.

According to the present invention a fuel cell network is proposed for providing electric energy to at least two electrical propulsion units driving a heavy-duty vehicle. Such a fuel cell network comprises at least one fuel cell stack per propulsion unit. It further comprises at least one DC bus per propulsion unit. The first DC bus is electrically isolated against every other DC bus and electrically connected to a first electrical propulsion unit. The first DC bus is further electrically connected to a first fuel cell stack via a DC-DC converter. Further at least one second DC bus is provided and electrically isolated against every other DC bus. That at least one second DC bus is also electrically connected to a second electrical propulsion unit and further electrically connected directly to a second fuel cell stack.

One core idea of the present invention is to provide a fuel cell network to produce energy to be provided to at least two different electrical propulsion units such as electric motors for example. The electric energy is provided specifically for each of those electric propulsion units by the electric connection via a separate DC bus. According to one the idea of the present invention each of the DC bus is specific for a fuel cell stack at one end of the electrical connection and one propulsion unit at the other end of the electrical connection. This means that the fuel cell stack, the correlating DC bus as well as the directly connected propulsion unit are creating electrically isolated subsystems which are electrically independent from all the other subsystems.

The afore mentioned separation of those specific subsystems brings some significant advantages. The first advantage is that each of those subsystems can be specifically designed to fulfil the respective needs of the respective propulsion unit. As explained later in more detail each of the fuel cell stacks of the respective DC bus and the respective propulsion unit can have a different structure, size or complexity to fulfil the respective specific needs of the connected propulsion unit. A further advantage of this subsystem structure is the fact that only one single DC-DC converter is needed. Since each of the subsequent DC bus, the subsequent propulsion units and in particular the subsequent fuel cell stacks are specifically correlated to each other. Each of the fuel cell stacks can specifically comprise the electrical components and the electrical structure as needed to fulfil the needs of the connected propulsion unit. A DC-DC converter therefore is not necessary for the additional subsystems. Since the DC-DC converter is still provided for the main subsystem in form of the first fuel cell stack there is a controllability for the first subsystem and thereby the other subsystems can be free of a specific DC-DC converter.

Furthermore, an advantage of the present structure of the different and specifically isolated subsystems is the fact that the overall voltage of such a fuel cell network can be kept low in particular at the standard level of 400 volts. This is independent from the number of subsystems provided since all of the subsystems are electrically isolated thereby creating a structure of parallel working fuel cell stacks which have, in contrast to the state-of-the-art structure of serial electrical connection, a non-increased voltage of the fuel cell network. This leads to the additional advantage to allow usability of standard components as balance of plant components for each of those subsystems since a standard level of voltage, for example 400 volts, is kept for the whole fuel cell network.

The operability of an inventive fuel cell network allows for example to use one subsystem in form of the first fuel cell stack to provide the general operation mode. If a heavy-duty vehicle, for example in form of a truck, is used on a regular track the first fuel cell stack is sufficient to provide the necessary energy for one propulsion unit in form of the main drive unit. In case of circumstance changes, for example in case the truck starts to ascent a track on a hill, additional propulsion energy is needed. This is recognized by the later on described control method and the additional propulsion energy may exceed the maximum load of the first fuel cell stack. In this special or heavy-duty operation mode the at least one second fuel cell stack is activated to generate the additional propulsion energy. This additional energy can be directed to a separate and heavy-duty mode propulsion unit in form of a separate propulsion unit, for example a separate electric motor. Since the specific amount of propulsion energy necessary for this heavy-duty mode is dependent for example from the angle and the speed of the ascending truck movement, the first fuel cell stack can still be controlled to generate specifically and exactly the amount of electric energy needed for the specific operation mode of the heavy-duty vehicle.

It is a further advantage of the present invention to provide a fuel cell network wherein the first DC bus is electrically connected to a first battery device. This system in general provides a hybrid solution for the first DC bus. This leads to an increased flexibility of operation of the heavy-duty vehicle and furthermore to a more constant operation mode of the first fuel cell stack. The fuel cell stack can be operated in a constant or almost constant manner while overproduction of energy is stored in the connected electrical battery device and for a short period of time additional amount of energy can be provided out of the battery device without activating the at least one second fuel cell stack and/or without increasing the load situation for the first fuel cell stack. In particular only the first DC bus is connected to a battery device as discussed in the following.

It is also an advantage in case of an inventive fuel cell network wherein only the first DC bus is connected to a first battery device while every other DC bus is free from any battery device. This reduces significantly the complexity of the overall network since only one battery device is necessary. Moreover, the first subsystem, which is constructed in hybrid form using the battery device, can make use of a standard fuel cell system, which is common knowledge for example used in standard vehicles. That standard hybrid system is enhanced by adding the at least one second fuel cell stack and the correlated second DC bus for the second propulsion unit. The reduced complexity and in particular the use of at least partly standard components and standard control methods, reduces complexity of such a fuel cell network and thereby this leads to a reduction of costs.

It is also an advantage in case of an inventive fuel cell network when every DC bus is electrically connected to further electrical components specific for each DC bus. Those further electrical components or secondary electrical components, also be called balance of plant components (BOP), are specific for each DC bus and thereby provide the necessary electrical specifications as needed for each DC bus. As already discussed, the electrical specifications depend on the voltage of each of the subsystems and since each of the subsystems can keep the voltage down to the standard level of for example 400 volts. The standard components can also be used for each of the subsystem electrical components.

Further of advantage is a fuel cell network, wherein the first fuel cell stack and the at least one second fuel cell stack are identical or in general identical. In particular when a heavy-duty vehicle is in need of multiple propulsion units for an amount of electrical energy produced by a multiple number of fuel cell stacks, each of those fuel cell stacks can be structured modularly identically so that all of those fuel cell stacks and all of the sub systems are in general interchangeable. In particular only one of those fuel cell stacks needs to be controlled by the DC-DC converter since all of the secondary fuel cell stacks provide the basic load to generate the necessary amount of electrical energy. The identical structure of most of the fuel cell stacks reduces costs and complexity of an inventive fuel cell network even further.

It is also of advantage for a fuel cell network according to the present invention wherein at least one DC bus is connected to at least two fuel cell stacks in parallel. This means that one DC bus can use the energy of more than one fuel cell stack thereby generating a higher amount of electrical energy. This allows the usage of two fuel cell stacks which are also connected in parallel via the one single DC converter to the DC bus and thereby allow to produce and provide additional electrical energy to the respective electrically connected propulsion unit.

A further advantage can be a fuel cell network wherein at least one DC bus is electrically connected to a fuel cell stack being different to at least one other fuel cell stack. As already mentioned above, the fuel cell stacks in terms of their maximum load operation mode can be correlated with the respective connected propulsion unit. This allows different propulsion units with different energy specifications, and thereby specifically with those energy specifications correlating fuel cell stacks can be part of the invented fuel cell network. Of course, it is possible to combine a fuel cell network with multiple identical fuel cell stacks with one or more different fuel cell stacks within one single fuel cell network.

It is also an advantage of an inventive fuel cell network wherein at least one DC bus comprises an electrical connection to the fuel cell stack free from a DC-DC converter. In particular, as already mentioned above, the DC-DC converter is only in place for the first fuel cell stack and the first DC bus. According to this embodiment of the present invention all other connections of each other DC bus are free from such a DC-DC converter, since the controllability is efficiently provided by the first fuel cell stack and the correlated DC-DC converter. To limit the overall fuel cell network down to one single DC-DC converter reduces complexity and costs of the structure and furthermore the complexity and the costs of the control method.

Further of advantage is a fuel cell network wherein the fuel cell stacks comprise a parallel feed and/or exhaust gas connection. While a parallel feed and exhaust gas connection is an advantage the valves to provide the feed and to get rid of the exhaust gas can be provided as single valves for the complete fuel cell network thereby opening the gas pipelines or closing them completely. In particular, those valves can be quantitative controllable valves, basically binary shutting down or opening the respective pipeline, or qualitative valves, giving a flexible and controllable rate of different flow rates to and from each of the fuel cell stacks.

A further aspect of the present invention is a heavy-duty vehicle comprising at least a first electrical propulsion unit to provide driving force in regular operation mode and at least a second electrical propulsion unit providing driving force in a heavy operation mode. Such a heavy-duty vehicle further comprises a fuel cell network according to the present invention, wherein every propulsion unit is electrically connected to a separate DC bus of the fuel cell network. Thereby an inventive heavy-duty vehicle brings the same advantages as in detail described related to the fuel cell network above.

A further aspect of the present invention is related to a method for controlling the fuel cell stacks of an inventive fuel cell network according to the present invention, comprising the following steps:
- Capturing the present propulsion demand of a heavy-duty vehicle,
- Comparing the captured propulsion demand with the maximum load of the fuel cell stacks of the fuel cell network,
- Selecting the specific fuel cell stacks being able to fulfil the captured propulsion demand,
- Operating the selected fuel cell stacks according to fulfil the captured propulsion demand.

An inventive method comes along with the same advantages as already discussed in detail with respect to the inventive fuel cell network.

The present invention is discussed in more detail with respect to the accompanying figures as discussed below. The figures show schematically:
- Fig. 1: a first embodiment of an inventive fuel cell network,
- Fig. 2: a second embodiment of a fuel cell network,
- Fig. 3: a third embodiment of the fuel cell network,
- Fig. 4: a further embodiment of a fuel cell network,
- Fig. 5: a further embodiment of a fuel cell network,
- Fig. 6: a further embodiment of a fuel cell network,
- Fig. 7: an embodiment of a heavy-duty vehicle.

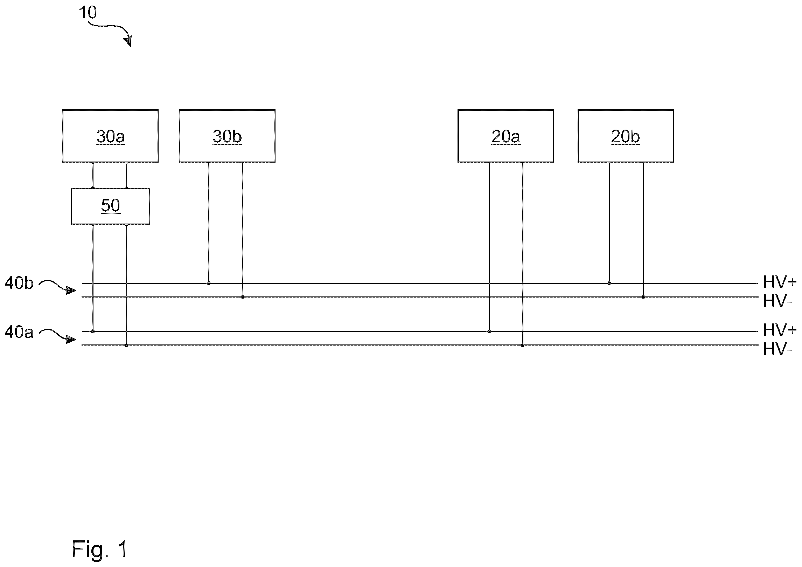

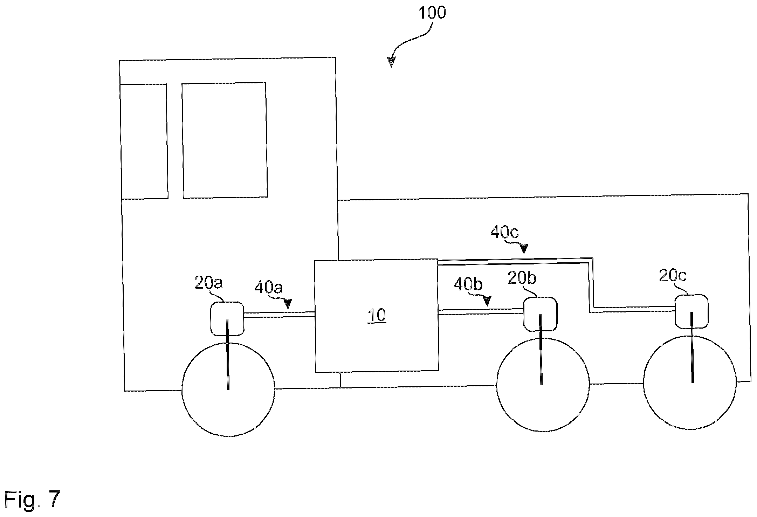

Figure 1 shows the one embodiment of a fuel cell network 10 comprising two different fuel cell stacks 30a and 30b. Each of the fuel cell stacks 30a and 30b are generally identically so that they can be produced cost efficient in a modular way. Moreover, a first DC bus 40a is electrically connected via a high voltage connection to the first fuel cell stack 30a via one single DC-DC converter 50. The electric energy generated by the first fuel cell stack 30a is converted by the DC-DC converter 50 in a controlled manner and is provided via the first DC bus 40a to a first propulsion unit 20a in form of an electric motor. In case the respectively equipped heavy-duty vehicle 100, as for example is depicted in figure 7, is in need of higher electrical propulsion energy the additional power demand can only be fulfilled by adding the second fuel cell stack 30b to the operation. The second fuel cell stack 30b is activated and now also starts to provide energy in an electrical form via the second DC bus 40b to the second propulsion unit 20b. In particular this second DC bus 40b is free from a DC-DC converter 50 since only the first DC bus 40a is controlled via the DC-DC converter 50.

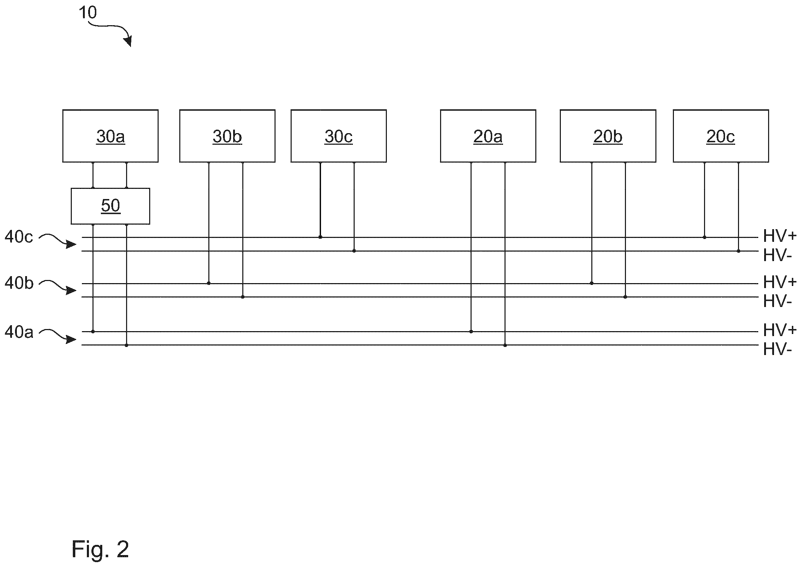

Figure 2 shows a further embodiment based on the embodiment depicted in figure 1. It shows an identical situation but with an additional third fuel cell stack 30c electrically connected via a third DC bus 40c to a third propulsion unit 20c. This adds an additional step for even further increased power demand of the heavy-duty vehicle 100 so that in the maximum heavy operation mode of the heavy-duty vehicle 100 all three fuel cell stacks 30a, 30b and 30c are in operation and provide electric energy to all 3 propulsion units 20a, 20b and 20c.

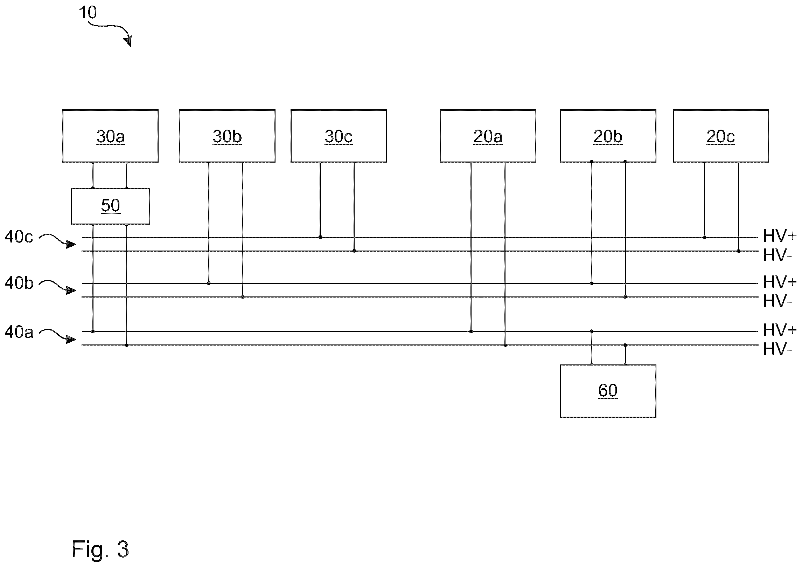

In figure 3 the embodiment of figure 2 is advanced by adding a battery device 60 to the first DC bus 40a. This allows a more stable and constant operating mode for the first fuel cell stack 30a since the battery device 60 provides a balancing or a levelling between the actual power demand of the connected first propulsion unit 20a and a stabilized operation mode of the energy providing first fuel cell stack 30a.

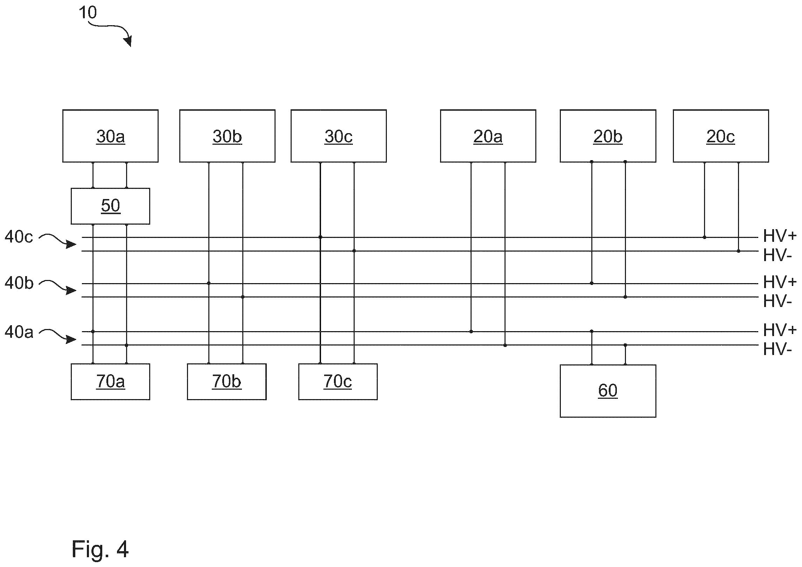

In figure 4 additionally for each of the 3 DC busses 40a, 40b and 40c all of them are connected to balance of plant secondary electrical components 70a, 70b and 70c. Those can be provided in a simple and cost-efficient manner since the voltage of all of the different subsystems of the DC bus 40a, 40b and 40c are kept for example at the standard level of 400 volts.

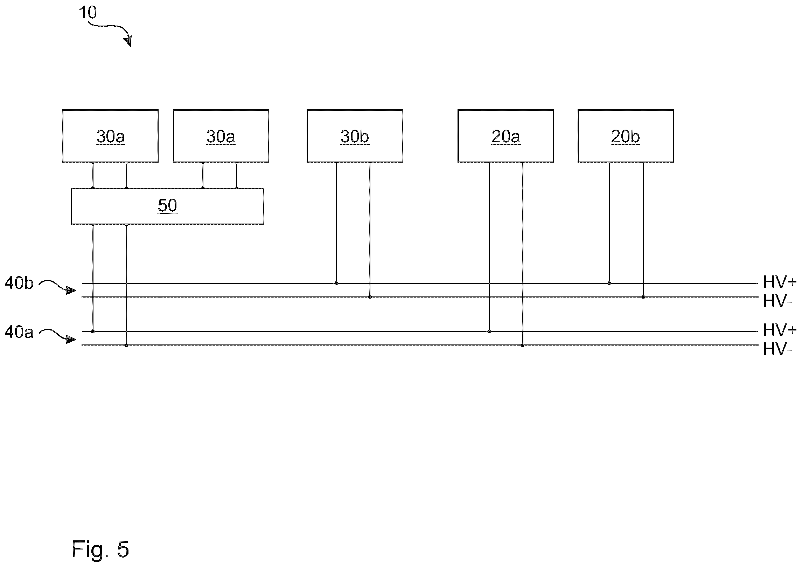

In figure 5 a further embodiment is shown wherein the first DC bus 40a is connected to 2 separate but identical fuel cell stacks 30a via the identical same and single DC-DC converter 50. This allows to produce a higher in particular at least the double of the electrical energy to be provided to the first and main propulsion unit 20a.

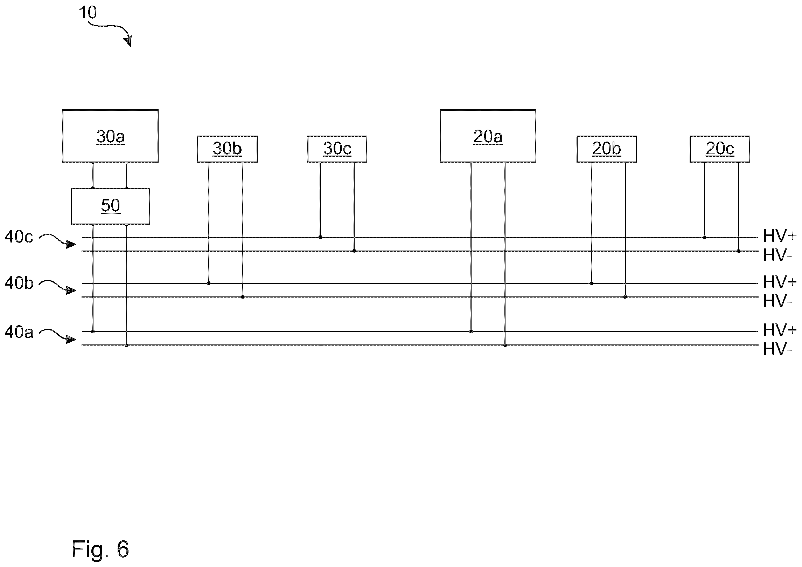

In figure 6 a further embodiment of the fuel cell network 10 is shown. In this embodiment the auxiliary fuel cell stacks 30b and 30c are structured and constructed smaller in terms of size, costs and complexity, so that they function as auxiliary power providers only. Respectively, they correlate with smaller constructed propulsion units 20b and 20c which can also be considered to be auxiliary propulsion units.

In figure 7 a heavy-duty vehicle 100 is shown in form of a truck. This is provided with a fuel cell network 10 in form of one of the embodiments of figures 1 to 6. This fuel cell network 10 is connected via three different DC busses 40a, 40b and 40c to three different propulsion units 20a, 20b and 20c driving and providing driving force to different axles of this truck. A control method is now able to select specific fuel cell stacks 30a, 30b and 30c within the fuel cell network to fulfil a detected power demand of one or even more of the propulsion units 20a, 20b und 20c.

The description of the embodiments is by the way of example only.

### Reference

- 10: fuel cell network
- 20a: propulsion unit
- 20b: propulsion unit
- 20c: propulsion unit
- 30a: fuel cell stack
- 30b: fuel cell stack
- 30c: fuel cell stack
- 40a: DC bus
- 40b: DC bus
- 40c: DC bus
- 50: DC-DC converter
- 60: battery device
- 70a: electrical components
- 70b: electrical components
- 70c: electrical components

- 100: heavy-duty vehicle

## Claims

1. Fuel cell network (10) for providing electric energy to at least two electrical propulsion units (20a, 20b, 20c) driving a heavy-duty vehicle (100), comprising at least one fuel cell stack (30a, 30b, 30c) per propulsion unit (20a, 20b, 20c) further comprising at least one DC bus (40a, 40b, 40c) per propulsion unit (20a, 20b, 20c), wherein a first DC bus (40a) is electrically isolated against every other DC bus (40b, 40c) and electrically connected to a first electrical propulsion unit (20a) and further electrically connected to a first fuel cell stack (30a) via a DC-DC converter (50), wherein further at least one second DC bus (40b) is electrically isolated against every other DC bus (40a, 40c) and electrically connected to a second electrical propulsion unit (20b) and further electrically connected directly to a second fuel cell stack (30b).

2. Fuel cell network (10) according to claim 1 **characterised in that** at least the first DC Bus (40a) is electrically connected to a first battery device (60).

3. Fuel cell network (10) according to claim 2, **characterised in that** only the first DC-Bus (40a) is connected to a first battery device (60), while every other DC bus (40b, 40c) is free from any battery device (60).

4. Fuel cell network (10) according to any of the proceedings claims, **characterised in that** every DC bus (40a, 40b, 40c) is electrically connected to further electrical components (70a, 70b, 70c) specific for each respective DC Bus (40a, 40b, 40c).

5. Fuel cell network (10) according to any of the proceedings claims, **characterised in that** the first fuel cell stack (30a) and the at least one second fuel cell stack (30b, 30c) are identical or in general identical.

6. Fuel cell network (10) according to any of the proceedings claims, **characterised in that** at least one DC-Bus (40a, 40b, 40c) is connected to at least two fuel cell stacks (30a, 30b, 30c) in parallel.

7. Fuel cell network (10) according to any of the proceedings claims, **characterised in that** at least one DC Bus (40a, 40b, 40c) is electrically connected to a fuel cell stack (30a, 30b, 30c) being different to at least one other fuel cell stack (30a, 30b, 30c).

8. Fuel cell network (10) according to any of the proceedings claims, **characterised in that** at least one DC Bus (40b, 40c) comprises an electrical connection to the fuel cell stack (30b, 30c) free from a DC-DC converter.

9. Fuel cell network (10) according to any of the proceedings claims, **characterised in that** the fuel cell stacks (30a, 30b, 30c) comprise a parallel feed and/or exhaust gas connection.

10. Heavy-duty vehicle (100), comprising at least a first electrical propulsion unit (20a) to provide driving force in regular operation mode and at least a second electrical propulsion unit (20b, 20c) providing driving force in a heavy operation mode, further comprising a fuel cell network (10) with the features of any of claims 1 to 9, wherein every propulsion unit (20a, 20b, 20c) is electrically connected to a separate DC Bus (40a, 40b, 40c) of the fuel cell network (10).

11. Method for controlling the fuel cell stacks (30a, 30b, 30c) of a fuel cell network (10) with the features of any of claims 1 to 9, comprising the following steps:
- Capturing the present propulsion demand of a heavy-duty vehicle (100),
- Comparing the captured propulsion demand with the maximum load of the fuel cell stacks (30a, 30b, 30c) of the fuel cell network (10),
- Selecting the specific fuel cell stacks (30a, 30b, 30c) being able to fulfil the captured propulsion demand,
- Operating the selected fuel cell stacks (30a, 30b, 30c) according to fulfil the captured propulsion demand.
